# EUROPEAN PATENT APPLICATION

(11) **EP 4 542 678 A1**
(43) Date of publication of application: **23.04.2025**
(21) Application number: 23884611.7
(22) Date of filing: 18.10.2023
(51) Int. Cl.: H01M 4/36, H01M 4/525, H01M 10/0525, H01M 4/131

(54) **POSITIVE ELECTRODE MATERIAL, POSITIVE ELECTRODE SHEET COMPRISING SAME, AND BATTERY**

(30) Priority: 01.11.2022 CN 202211358612
(71) Applicant: Zhuhai CosMX Battery Co., Ltd., Zhuhai, Guangdong 519180 (CN)
(72) Inventor: ZENG, Jiajiang, Zhuhai, Guangdong 519180 (CN); XIA, Dingguo, Zhuhai, Guangdong 519180 (CN); LI, Suli, Zhuhai, Guangdong 519180 (CN)
(74) Representative: Murgitroyd & Company
(86) International application number: PCT/CN2023/125242
(87) International publication number: WO 2024/093679

(57) **Abstract**

The present invention relates to a positive electrode material, and a positive electrode plate and a battery including the positive electrode material. The positive electrode material has a special phase structure distinct from that of a conventional lithium cobalt oxide material. The positive electrode material may present a plurality of small charging and discharging platforms in a charging and discharging process. Compared with a conventional high-voltage lithium cobalt oxide material, the positive electrode material exhibits the following advantage in terms of electrochemical performance: under a condition that a charge-discharge cut-off voltage and a charge and discharge rate remain the same, the positive electrode material has higher gram capacity performance and cycling performance. Specifically, compared with an undoped compound that belongs to a P63mc space group and has an O2 phase packed structure, the compound has higher gram capacity and better cycling performance due to an effect of element potassium.

## Description

### TECHNICAL FIELD

The present invention pertains to the field of battery technologies, and specifically relates to a positive electrode material, and a positive electrode plate and a battery including the positive electrode material.

### BACKGROUND

With the development and advancement of technologies of lithium-ion batteries, higher requirements are put forward for capacities of the lithium-ion batteries. Among components of a lithium-ion battery, a capacity of a positive electrode material plays a crucial role in a capacity of the lithium-ion battery. To increase a capacity of a lithium-ion battery, an important way is to increase a charging and discharging voltage of the lithium-ion battery. However, with the increase of the voltage, a positive electrode material of the lithium-ion battery produces a series of bad changes such as crystal structure instability, fast capacity attenuation, and significant decrease in cycling performance. Therefore, it is a very critical task to develop a positive electrode material of a lithium-ion battery that has a high specific capacity, a high-voltage platform, good cycling performance, and high interface stability at a high voltage.

### SUMMARY

With respect to problems in the conventional technology, the present invention provides a positive electrode material, and a positive electrode plate and a battery including the positive electrode material. The positive electrode material belongs to a P63mc space group, and has an O2 phase packed structure. The positive electrode material has a high specific capacity, good interface stability, and high cycling stability at a high voltage. Using the positive electrode material can improve a gram capacity, cycling performance, rate performance, and an energy density of a battery.

The present invention is intended to be implemented by using the following technical solutions.

A positive electrode material is provided, where the positive electrode material is a lithium-containing transition metal oxide that includes element Li, element Na, element K, and element Co, and optionally includes element A and/or element M; element A is selected from at least one of B or P; and element M is selected from at least one of Al, Mg, Ti, Mn, Te, Ni, W, Nb, Zr, La, or Y

According to an implementation of the present invention, a molar mass of element K in each mole of the positive electrode material is z; a molar mass of element Co in each mole of the positive electrode material is 1-a-b; a molar mass of element A in each mole of the positive electrode material is a; a molar mass of element M in each mole of the positive electrode material is b; and a ratio of z to 1-a satisfies 0 < z/1-a < 0.05.

According to an implementation of the present invention, "optionally" indicates that the lithium-containing transition metal oxide may be selected or may not be selected.

According to an implementation of the present invention, a molar mass z of element K in each mole of the positive electrode material satisfies 0 < z < 0.05. For example, z is 0.001, 0.002, 0.003, 0.004, 0.005, 0.006, 0.007, 0.008, 0.010, 0.012, 0.015, 0.018, 0.020, 0.022, 0.024, 0.025, 0.026, 0.028, 0.030, 0.032, 0.034, 0.035, 0.036, 0.038, 0.04, 0.042, 0.043, 0.045, 0.046, 0.048, or 0.049.

According to an implementation of the present invention, by controlling a doping amount of doping element K, electrochemical dynamic performance and rate performance in a charging and discharging process may be improved, and a polarization phenomenon may be reduced, so that the gram capacity, coulombic efficiency, rate performance, and cycling performance of a battery using the positive electrode material are relatively high.

According to an implementation of the present invention, a molar mass a of element A in each mole of the positive electrode material satisfies 0 ≤ a < 0.05. For example, a is 0, 0.001, 0.002, 0.003, 0.004, 0.005, 0.006, 0.007, 0.008, 0.010, 0.012, 0.015, 0.018, 0.020, 0.022, 0.024, 0.025, 0.026, 0.028, 0.030, 0.032, 0.034, 0.035, 0.036, 0.038, 0.04, 0.042, 0.043, 0.045, 0.046, 0.048, or 0.049.

According to an implementation of the present invention, element A is selected from at least one of B or P, and is preferably B. Element B and element P have a fluxing effect, so that a morphology of the positive electrode material is a single crystal or polycrystalline spherical morphology with a large particle size. Particularly, when element A is selected from element B, the morphology of the positive electrode material is a single crystal morphology. Moreover, element B may make a structure of the positive electrode material more stable, so that an interface between the positive electrode material and an electrolyte solution in a charging and discharging process can be stabilized, thereby being beneficial to improve cycling performance of the battery. In addition, elements B and P may significantly increase the gram capacity and press density of the positive electrode material, thereby being beneficial to improve the energy density and rate performance of the battery.

According to an implementation of the present invention, a molar mass b of element M in each mole of the positive electrode material satisfies 0 ≤ b < 0.1. For example, b is 0, 0.001, 0.002, 0.003, 0.004, 0.005, 0.006, 0.007, 0.008, 0.010, 0.012, 0.015, 0.018, 0.020, 0.022, 0.024, 0.025, 0.026, 0.028, 0.030, 0.032, 0.034, 0.035, 0.04, 0.045, 0.05, 0.055, 0.06, 0.065, 0.07, 0.075, 0.08, 0.085, 0.09, or 0.095.

According to an implementation of the present invention, element M replaces part of element Co. By controlling a doping amount of element M, an architecture of a cobalt layer may be stabilized, thereby improving stability of an overall structure of the positive electrode material.

According to an implementation of the present invention, a molar mass y of element Na in each mole of the positive electrode material satisfies 0 < y < 0.03. For example, y is 0.001, 0.002, 0.003, 0.004, 0.005, 0.006, 0.007, 0.008, 0.010, 0.012, 0.015, 0.018, 0.020, 0.022, 0.024, 0.025, 0.026, or 0.028.

According to an implementation of the present invention, a layered structure of the positive electrode material may be supported by controlling a doping amount of element Na, thereby being beneficial to improve intercalation and deintercalation of lithium ions.

According to an implementation of the present invention, a chemical formula of the positive electrode material is:

Li_{n-y-z}Na_{y}K_{z}Co_{1-a-b}AₐM_{b}O₂, where 0.7 ≤ n ≤ 1.02, 0 < y < 0.03, 0 < z < 0.05, 0 ≤ a < 0.05, 0 ≤ b < 0.1, and 0 < z/1-a < 0.05, and A and M are defined as above. When z/1-a is within the range specified in the present invention, it indicates that a doping amount of element K is limited to a specific range. In this range, a radius of K ions is greater than a radius of Li ions. This plays a specific role in supporting a skeleton of the layered structure, thereby accelerating intercalation and deintercalation of Li ions, and being beneficial to improve gram capacity performance and cycling performance. When z/1-a is out of the range, it indicates that more Li is replaced by element K, and the loss of Li leads to a significant decrease in gram capacity performance.

According to an implementation of the present invention, n in the chemical formula of the positive electrode material has different values in different lithium deintercalation states; and the value of n in the positive electrode material in a powder state ranges from 0.95 to 1.02 before sorting of a positive electrode plate including the positive electrode material. The value of n in the positive electrode material ranges from 0.70 to 1.0 after sorting (at a voltage ranging from 3.6 V to 4.0 V) of the positive electrode plate including the positive electrode material. This is mainly because, in an initial charging and discharging process of a battery, a part of lithium ions are used to form protective layers on surfaces of a positive electrode or a negative electrode, namely, a CEI film (Cathode Electrolyte Interphase) and an SEI film (Solid Electrolyte Interphase), which causes irreversible loss of the part of Li⁺. Therefore, a content of Li in the positive electrode material in the positive electrode plate after sorting is obviously lower than a content of Li in the positive electrode material in the powder state before sorting.

According to an implementation of the present invention, the positive electrode material has an O2 phase packed structure and belongs to a P63mc space group. The space group is a layered structure that has larger interlayer spacing than an existing O3 phase packed structure. Therefore, the positive electrode material is easier to deintercale or intercale lithium ions.

According to an implementation of the present invention, the positive electrode material has a polycrystalline morphology or a single crystal morphology. The polycrystalline morphology has better rate performance, but the single crystal morphology has a higher press density.

According to an implementation of the present invention, Dv50 of the positive electrode material ranges from 12 µm to 20 µm, for example, is 13 µm, 14 µm, 15 µm, 16 µm, 17 µm, 18 µm, 19 µm, or 20 µm. Dv50 of the positive electrode material may be tested by using a laser particle size analyzer. Dv50 denotes a particle size whose cumulative volume particle distribution percentage in a sample reaches 50%. When Dv50 of the positive electrode material is within the foregoing range, a bulk density of the positive electrode material may be improved, and a capacity of the battery may be improved.

According to an implementation of the present invention, X-ray diffraction tests show that the positive electrode material includes at least a 002 crystal face (2θ = 18.6° ± 0.5°) characteristic peak, a 102 crystal face (2θ = 41.7° ± 0.5°) characteristic peak, and a 103 crystal face (2θ = 47.1° ± 0.5°) characteristic peak. It may be noted that the positive electrode material has an O2 phase packed structure.

According to an implementation of the present invention, X-ray diffraction tests show that a peak intensity ratio m of a 101 crystal face (2θ = 38.2° ± 0.2°) characteristic peak of the positive electrode material to a 004 crystal face (2θ = 37.6° ± 0.2°) characteristic peak thereof is greater than or equal to 2. For example, the ratio ranges from 2 to 8, for example, from 2 to 5, for example, is 2, 3, 4, 5, 6, 7, or 8. Having this characteristic indicates that the interlayer spacing of the layered compound is larger, and that a degree of order of the layered structure is higher, which is conducive to structural stability of the positive electrode material.

According to an implementation of the present invention, a gram capacity of the positive electrode material is greater than or equal to 210 mAh/g (button battery, and an upper voltage limit is greater than or equal to 4.50 V (relative to lithium)).

The present invention further provides a preparation method of the foregoing positive electrode material. The method includes the following steps:
Step 1: synthesizing a compound NaₓK_{z}Co_{1-a-b}AₐM_{b}O₂ that includes element Co, element Na, element K, optionally includes element A and optionally includes element M, where 0.68 < x < 0.74, and definitions of z, a, b, A, and M are described above.
Step 2: replacing most of Na ions in NaₓK_{z}Co_{1-a-b}AₐM_{b}O₂ with Li ions according to a solution method to obtain a positive electrode material whose chemical formula is Li_{n-y-z}Na_{y}K_{z}Co_{1-a-b}AₐM_{b}O₂.

According to an implementation of the present invention, the preparation method of the positive electrode material includes the following steps:
1) weighing a cobalt-containing compound, a sodium-containing compound, a potassium-containing compound, an A-containing compound, and an M-containing compound at a stoichiometric ratio, and mixing the compounds to obtain a mixture;
2) performing high-temperature calcination on the mixture obtained in step 1) to obtain a compound whose chemical formula is NaₓK_{z}Co_{1-a-b}AₐM_{b}O₂; and
3) mixing the compound whose chemical formula is NaₓK_{z}Co_{1-a-b}AₐM_{b}O₂ obtained in step 2) with a lithium-containing compound in a solvent to carry out an ion exchange reaction, and washing and baking a reaction product after the reaction is complete, to obtain the positive electrode material.

According to an implementation of the present invention, in step 1), a time of mixing is shorter than or equal to 4 hours.

According to an implementation of the present invention, in step 1), mixing is, for example, at least one of high-speed stirring, ball milling, or sand grinding.

According to an implementation of the present invention, in step 1), mixing is performed by using, for example, a high-speed mixing device, a sand grinding device, a ball grinding device, a colter mixing device, or an inclined mixing device. When a medium (for example, water, alcohol, or another solvent medium) is added in the ball milling or sand grinding process, baking needs to be performed after mixing.

According to an implementation of the present invention, in step 1), the cobalt-containing compound is selected from cobalt hydroxide, cobaltosic oxide, doped cobaltosic oxide, cobaltous oxide, cobalt oxyhydroxide, cobaltous nitrate, cobalt sulfate, or the like.

According to an implementation of the present invention, in step 1), the sodium-containing compound is selected from sodium oxide, sodium carbonate, sodium nitrate, sodium hydroxide, sodium bicarbonate, sodium sulfate, or the like.

According to an implementation of the present invention, in step 1), the potassium-containing compound is selected from potassium oxide, potassium carbonate, potassium nitrate, potassium hydroxide, potassium bicarbonate, potassium sulfate, or the like.

According to an implementation of the present invention, in step 1), the A-containing compound is selected from an oxide of B, an oxide of P, a hydroxide of B, a hydroxide of P, an acid of B, an acid of P, a salt of B, or a salt of P.

According to an implementation of the present invention, in step 1), the A-containing compound is selected from a boric acid or a phosphoric acid.

According to an implementation of the present invention, in step 1), the M-containing compound is selected from an oxide, a hydroxide, or a salt of Al, Mg, Ti, Mn, Te, Ni, W, Nb, Zr, La, or Y.

According to an implementation of the present invention, in step 1), the M-containing compound is selected from basic magnesium carbonate, magnesium hydroxide, zirconium oxide, aluminum oxide, aluminum hydroxide, yttrium oxide, lanthanum oxide, aluminum phosphate, sodium pyrophosphate, sodium tungstate, lanthanum fluoride, or the like.

According to an implementation of the present invention, in step 2), a temperature of calcination ranges from 700°C to 900°C, a time of calcination ranges from 8 hours to 50 hours, and calcination is performed in an air or oxygen atmosphere.

According to an implementation of the present invention, in step 2), the mixture is placed in a crucible, and then high-temperature calcination is performed after the crucible is placed in a high-temperature sintering device such as a muffle furnace, a tunnel furnace, a roller kiln, or a tube furnace.

According to an implementation of the present invention, in step 3), the lithium-containing compound is selected from lithium fluoride, lithium chloride, lithium bromide, lithium iodide, lithium hydroxide, lithium nitrate, and lithium carbonate.

According to an implementation of the present invention, in step 3), the solvent is selected from water or an organic solution.

According to an implementation of the present invention, in step 3), a mass ratio of the lithium-containing compound to the compound whose chemical formula is NaₓK_{z}Co_{1-a-b}AₐM_{b}O₂ is greater than or equal to 1, and preferably ranges from 1 to 3.

According to an implementation of the present invention, in step 3), a mass ratio of the solvent to the compound whose chemical formula is NaₓK_{z}Co_{1-a-b}AₐM_{b}O₂ is greater than or equal to 5, and preferably ranges from 20 to 150.

According to an implementation of the present invention, in step 3), a reaction device used for the ion exchange reaction includes a device with a closed container, a sealing function, and a stirring capability, for example, a wet coating reaction device or a co-precipitation reaction device.

According to an implementation of the present invention, in step 3), the ion exchange reaction is carried out under a stirring condition, where a stirring speed ranges from 10 rpm to 200 rpm, a reaction temperature ranges from 70°C to 125°C, and a reaction time is longer than or equal to 5 hours, for example, ranges from 10 hours to 15 hours.

According to an implementation of the present invention, in step 3), a baking temperature ranges from 80°C to 180°C, and a baking time is longer than or equal to10 hours.

According to an implementation of the present invention, in step 3), a device used in the baking process is, for example, a fan oven, a vacuum drying oven, a rotary kiln, a tray dryer, or an oven.

The present invention further provides a positive electrode plate. The positive electrode plate includes the foregoing positive electrode material.

According to an implementation of the present invention, the positive electrode plate includes a positive electrode current collector and an active material layer. The active material layer is applied to at least one side surface of the positive electrode current collector. The active material layer includes the foregoing positive electrode material.

According to an implementation of the present invention, the positive electrode plate includes a positive electrode current collector, a safety layer, and an active material layer. The safety layer is applied to at least one side surface of the positive electrode current collector. The active material layer is applied to a surface of the safety layer and/or a surface of the positive electrode current collector. The active material layer includes the foregoing positive electrode material.

According to an implementation of the present invention, the safety layer includes an iron-containing compound (for example, lithium iron phosphate or lithium phosphate), an aluminum-containing compound (for example, aluminum oxide ceramics), and some other non-conductive safety dielectric materials.

According to an implementation of the present invention, the active material layer further includes a conductive agent and a binder.

According to an implementation of the present invention, mass percentages of the components in the active material layer are: 70 wt% to 99 wt% of the positive electrode material, 0.5 wt% to 15 wt% of the conductive agent, and 0.5 wt% to 15 wt% of the binder.

According to an implementation of the present invention, mass percentages of the components in the active material layer are: 80 wt% to 98 wt% of the positive electrode material, 1 wt% to 10 wt% of the conductive agent, and 1 wt% to 10 wt% of the binder.

According to an implementation of the present invention, the conductive agent is selected from at least one of conductive carbon black, acetylene black, Ketjen black, conductive graphite, carbon nanotube (single-walled carbon nanotube and/or multi-walled carbon nanotube), or carbon fiber (for example, conductive carbon fiber).

According to an implementation of the present invention, the binder is selected from at least one of polyvinylidene fluoride (PVDF), polytetrafluoroethylene (PTFE), or lithium polyacrylate (PAA-Li).

The present invention further provides a battery. The battery includes the foregoing positive electrode material, or the battery includes the foregoing positive electrode plate.

According to an implementation of the present invention, the battery further includes a negative electrode plate, a separator, and an electrolyte solution.

According to an implementation of the present invention, the electrolyte solution includes a lithium salt and an organic solvent.

According to an implementation of the present invention, the organic solvent is selected from at least one of ethylene carbonate (EC for short), diethyl carbonate (DEC for short), propylene carbonate (PC for short), or fluoroethylene carbonate (FEC for short).

According to an implementation of the present invention, the electrolyte solution further includes an additive, where the additive includes 2,4-butane sultone.

According to an implementation of the present invention, a chemical structural formula of 2,4-butane sultone is:

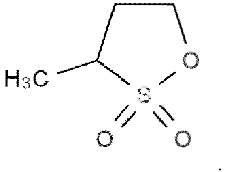

According to an implementation of the present invention, a content of 2,4-butane sultone accounts for 0.1 wt% to 10 wt% of a total mass of the electrolyte solution, for example, is 0.1 wt%, 0.2 wt%, 0.3 wt%, 0.4 wt%, 0.5 wt%, 0.6 wt%, 0.7 wt%, 0.8 wt%, 0.9 wt%, 1 wt%, 1.1 wt%, 1.2 wt%, 1.3 wt%, 1.4 wt%, 1.5 wt%, 1.6 wt%, 1.7 wt%, 1.8 wt%, 1.9 wt%, 2 wt%, 2.2 wt%, 2.4 wt%, 2.5 wt%, 2.6 wt%, 2.8 wt%, 3 wt%, 3.3 wt%, 3.5 wt%, 3.8 wt%, 4 wt%, 4.2 wt%, 4.5 wt%, 4.8 wt%, 5 wt%, 6 wt%, 7 wt%, 8 wt%, 9 wt%, or 10 wt%. When the foregoing electrolyte additive 2,4-butane sultone is included in the technical solution, and the content of 2,4-butane sultone is within the scope defined in the technical solution, the additive is beneficial to form a film, which improves the cycling performance of the battery to some extent.

According to an implementation of the present invention, the negative electrode plate includes a negative electrode current collector and a negative electrode active material layer. The negative electrode active material layer is applied on at least one side surface of the negative electrode current collector. The negative electrode active material layer includes a negative electrode active material, a conductive agent, and a binder.

According to an implementation of the present invention, mass percentages of the components in the negative electrode active material layer are: 70 wt% to 99 wt% of the negative electrode active material, 0.5 wt% to 15 wt% of the conductive agent, and 0.5 wt% to 15 wt% of the binder.

According to an implementation of the present invention, mass percentages of the components in the negative electrode active material layer are: 80 wt% to 98 wt% of the negative electrode active material, 1 wt% to 10 wt% of the conductive agent, and 1 wt% to 10 wt% of the binder.

According to an implementation of the present invention, the negative electrode active material is selected from a combination of one or more of artificial graphite, natural graphite, hard carbon, mesocarbon microbead, lithium titanate, silicon carbon, or silicon monoxide.

According to an implementation of the present invention, the separator is selected from a material whose substrate is polypropylene, or a coating separator obtained by applying ceramics on a single side or double sides of the material.

According to an implementation of the present invention, a discharge capacity obtained when 0.1C charging and discharging is performed on the battery for the first time at a voltage of 3.0 V to 4.5 V is defined as C₀ mAh/g, a discharge capacity obtained in a voltage range from a voltage before discharging to 4.4 V is defined as C₁ mAh/g, a discharge capacity obtained in a voltage range from 3.8 V to 3.7 V is defined as C₂ mAh/g, and the discharge capacities of the positive electrode material at 0.1C satisfy C₁/C₀ ≥ 9% and C₂/C₀ ≥ 25%.

Beneficial effects are as follows:
The present invention provides a positive electrode material, and a positive electrode plate and a battery that include the positive electrode material. The positive electrode material has a special phase structure distinct from that of a conventional lithium cobalt oxide material. The positive electrode material may present a plurality of small charging and discharging platforms in a charging and discharging process. Compared with a conventional high-voltage lithium cobalt oxide material, the positive electrode material provided in the present invention exhibits the following advantage in terms of electrochemical performance: under a condition that a charge-discharge cut-off voltage and a charge and discharge rate remain the same, the positive electrode material has higher gram capacity performance and cycling performance. Specifically, compared with an undoped compound that belongs to a P63mc space group and has an O2 phase packed structure, the compound of the positive electrode material in the present invention has higher gram capacity and better cycling performance due to an effect of doping element potassium.

In summary, compared with the conventional technology, because the positive electrode material in the present invention is used, the battery in the present invention may have good cycling stability and relatively high gram capacity performance under a use condition of a higher voltage, for example, 4.50 V, thereby meeting a thinning and lightening use requirement of a high-end digital product.

### BRIEF DESCRIPTION OF THE DRAWINGS

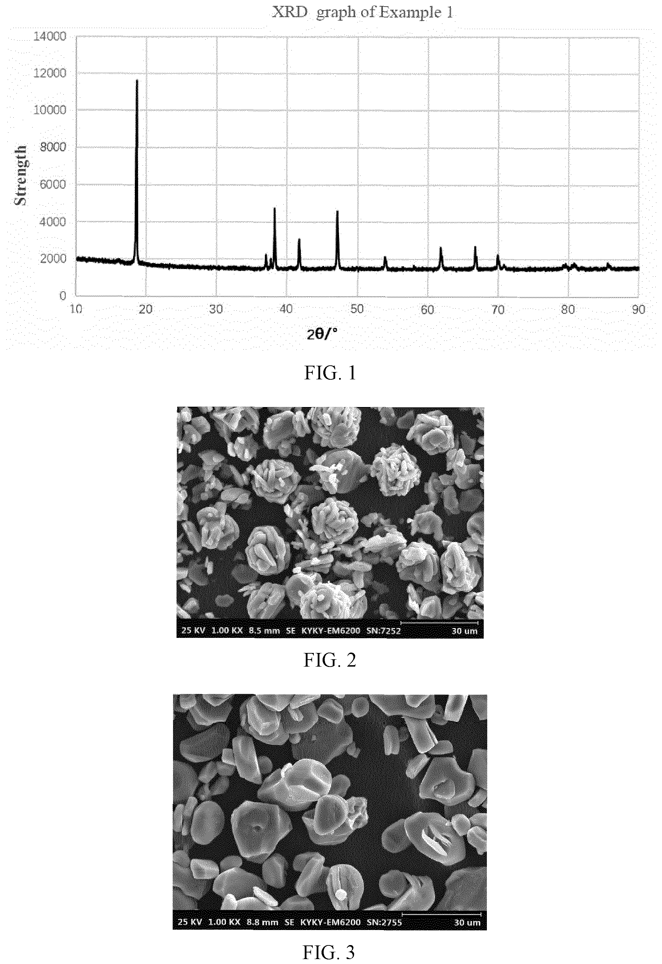

FIG. 1 is an XRD graph of a positive electrode material in Example 1.
FIG. 2 is an SEM image of a positive electrode material in Example 1.
FIG. 3 is an SEM image of a positive electrode material in Example 6.

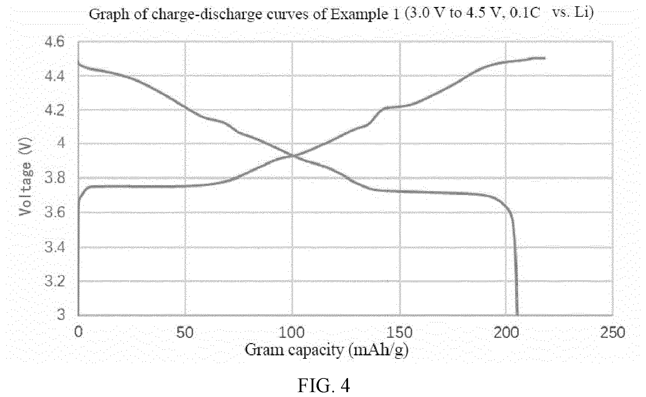

FIG. 4 is a graph of charge-discharge curves of a button battery in Example 1.

### DETAILED DESCRIPTION OF THE EMBODIMENTS

A preparation method in the present invention is further described in detail below with reference to specific examples. It should be understood that the following examples are merely for the purposes of illustrating and explaining the present invention, and should not be construed as limiting the protection scope of the present invention. All technologies implemented based on the foregoing content of the present invention are within the protection scope of the present invention.

All experimental methods used in the following examples are conventional methods, unless otherwise specified. Reagents, materials, and the like that are used in the following examples may be all obtained from commercial sources unless otherwise specified.

Characteristic peaks of the positive electrode material are represented by performing X-ray diffraction (XRD) on the positive electrode material provided in the present invention. A molar content of each element in the chemical formula is represented by using an Inductively Coupled Plasma Spectrometer (ICP).

The positive electrode material provided in the present invention is represented by being assembled with a negative electrode plate and an electrolyte solution into a full battery or a button battery.

### Example 1

A preparation method of the positive electrode material includes the following steps:
(1) 36.56 g of sodium carbonate powder, 0.21 g of potassium carbonate powder, 282.32 g of cobaltous nitrate hexahydrate powder, and 1.53 g of nano-alumina powder were weighed and put into a high-speed mixing device; a mixing program was set; mixing was performed at 300 rpm for 3 minutes, at 500 rpm for 5 minutes, and at 1000 rpm for 10 minutes sequentially; and finally, the mixture was taken out, where it was considered that the materials were evenly mixed after it was determined that there were no small white sodium carbonate spots in the mixture.
(2) About 30 g of the evenly mixed mixture was taken out and evenly put into a ceramic crucible; high-temperature sintering was performed in a well-type muffle furnace whose device model was VBF-1200X, where a heating curve of sintering was 5 °C/min; when a temperature of 750°C was reached, constant-temperature sintering was performed for 10 hours; then, the mixture was naturally cooled to a normal temperature; and finally, a sample was taken out to obtain a sintered cobalt and sodium-containing compound Na_{0.69}K_{0.003}Co_{0.97}Al_{0.03}O₂, namely, a sample 1# of the positive electrode material.
(3) 200 ml of deionized water was added into a reaction vessel; 10.49 g of lithium hydroxide monohydrate and 10.59 g of lithium chloride particles were first weighed and separately added into the reaction vessel; stirring was performed for 5 minutes at a water temperature of 78°C and a rotational speed of 20 rpm; then, 10 g of the cobalt and sodium-containing compound Na_{0.69}K_{0.003}Co_{0.}97Al0_{.03}O₂ synthesized in step (2) was weighed and poured into the reaction vessel; and a reaction lasted for 8 hours while the temperature of 78°C and the rotational speed of 20 rpm were kept.
(4) The material was taken out after the reaction was completed; then, suction filtration and washing were performed for three times with deionized water; a fan drying oven or a vacuum drying oven was set to 90°C; drying was performed for 8 hours to obtain the sample 1#; an XRD test was carried out for powder of the synthesized sample 1#; and a button battery and a full battery were assembled and tested.

### Examples 2 to 11

Preparation methods of samples 2# to 11# of the positive electrode material are the same as that in Example 1. Details are not described herein again. A difference lies only in step (1):

Different stoichiometric amounts of sodium carbonate powder, potassium carbonate powder, and cobaltous nitrate hexahydrate powder (as shown in Table 1 below), and different amounts of different additive compounds (as shown in Table 1 below) were weighed and put into a high-speed mixing device; a mixing program was set; mixing was performed at 300 rpm for 3 minutes, at 500 rpm for 5 minutes, and at 1000 rpm for 10 minutes sequentially; and finally, the mixture was taken out, where it was considered that the materials were evenly mixed after it was determined that there were no small white sodium carbonate spots in the mixture.

### Example 12

A preparation method of a sample 12# of the positive electrode material is the same as that in Example 1. Details are not described herein again. A difference lies only in step (3):

(3) 300 ml of deionized water was added into a reaction vessel; 10.49 g of lithium hydroxide monohydrate and 10.59 g of lithium chloride particles were first weighed and separately added into the reaction vessel; stirring was performed for 5 minutes at a water temperature of 78°C and a rotational speed of 20 rpm; then, 10 g of the cobalt and sodium-containing compound Na_{0.69}K_{0.003}Co_{0.97}Al_{0.03}O₂ synthesized in step (2) was weighed and poured into the reaction vessel; and a reaction lasted for 8 hours while the temperature of 78°C and the rotational speed of 20 rpm were kept.

### Example 13

A preparation method of a sample 13# of the positive electrode material is the same as that in Example 1. Details are not described herein again. A difference lies only in step (3):

(3) 400 ml of deionized water was added into a reaction vessel; 10.49 g of lithium hydroxide monohydrate and 10.59 g of lithium chloride particles were first weighed and separately added into the reaction vessel; stirring was performed for 5 minutes at a water temperature of 78°C and a rotational speed of 20 rpm; then, 10 g of the cobalt and sodium-containing compound Na_{0.69}K_{0.003}Co_{0.97}Al_{0.03}O₂ synthesized in step (2) was weighed and poured into the reaction vessel; and a reaction lasted for 8 hours while the temperature of 78°C and the rotational speed of 20 rpm were kept.

### Example 14

A preparation method of a sample 14# of the positive electrode material is the same as that in Example 1. Details are not described herein again. A difference lies only in step (3):

(3) 200 ml of deionized water was added into a reaction vessel; 10.49 g of lithium hydroxide monohydrate and 10.59 g of lithium chloride particles were first weighed and separately added into the reaction vessel; stirring was performed for 5 minutes at a water temperature of 78°C and a rotational speed of 30 rpm; then, 10 g of the cobalt and sodium-containing compound Na_{0.69}K_{0.003}Co_{0.97}Al_{0.03}O₂ synthesized in step (2) was weighed and poured into the reaction vessel; and a reaction lasted for 8 hours while the temperature of 78°C and the rotational speed of 30 rpm were kept.

### Example 15

A preparation method of a sample 15# of the positive electrode material is the same as that in Example 1. Details are not described herein again. A difference lies only in step (3):

(3) 200 ml of deionized water was added into a reaction vessel; 10.49 g of lithium hydroxide monohydrate and 10.59 g of lithium chloride particles were first weighed and separately added into the reaction vessel; stirring was performed for 5 minutes at a water temperature of 78°C and a rotational speed of 35 rpm; then, 10 g of the cobalt and sodium-containing compound Na_{0.69}K_{0.003}Co_{0.97}Al_{0.03}O₂ synthesized in step (2) was weighed and poured into the reaction vessel; and a reaction lasted for 8 hours while the temperature of 78°C and the rotational speed of 35 rpm were kept.

### Comparative Example 1

A conventional undoped lithium cobalt oxide positive electrode material was synthesized, where a chemical composition thereof was Li_{1.0025}CoO₂.

The preparation method of the positive electrode active material included the following steps:
(1) Lithium carbonate and conventional undoped spherical Co₃O₄ particles purchased on the market were weighed in a molar ratio Li:Co = 100.25:100, and put into a high-speed mixing device that was the same as the mixing device used in the Examples; a mixing program was set; mixing was performed at 300 rpm for 3 minutes, at 500 rpm for 5 minutes, and at 1000 rpm for 10 minutes sequentially; and finally, the mixture was taken out, where it was considered that the materials were evenly mixed after it was determined that there were no small white lithium carbonate spots in the mixture.
(2) About 30 g of the evenly mixed mixture was taken out and evenly put into a ceramic crucible; high-temperature sintering was performed in a well-type muffle furnace whose device model was VBF-1200X, where a heating curve of sintering was 5 °C/min; when a temperature of 1050°C was reached, constant-temperature sintering was performed for 10 hours; then, the mixture was naturally cooled to a normal temperature; and finally, a sample was taken out to obtain a sintered cobalt and lithium-containing compound Li_{1.0025}CoO₂.
(3) The sintered conventional lithium cobalt oxide was pulverized and ground; the powder was put into the muffle furnace; sintering was performed for 8 hours at 950°C; and then the sintered product was pulverized to obtain Li_{1.0025}CoO₂ whose Dv50 was 15.2 µm and that did not have any dopants or coatings, namely, a sample 16# of the positive electrode material.

### Comparative Example 2

A conventional high-voltage doped and coated lithium cobalt oxide positive electrode material was synthesized, where a chemical composition thereof was Li_{1.0027}CO_{0.966}Al_{0.03}Mg_{0.002}La_{0.002}O₂, and a phase thereof was O3 phase. The preparation method of the positive electrode active material included the following steps:
(1) Lithium carbonate, conventional spherical Co₃O₄ particles containing doped Al and La, and magnesium oxide particles that were purchased on the market were weighed in a molar ratio Li:Co:Mg = 100.27:96.6:0.2, and put into a high-speed mixing device that was the same as the mixing device used in the Examples, where a stoichiometric ratio Co:Al:La of the Co₃O₄ particles was 96.6:3.0:0.2; a mixing program was set; mixing was performed at 300 rpm for 3 minutes, at 500 rpm for 5 minutes, and at 1000 rpm for 10 minutes sequentially; and finally, the mixture was taken out, where it was considered that the materials were evenly mixed after it was determined that there were no small white lithium carbonate spots in the mixture.
(2) About 30 g of the evenly mixed mixture was taken out and evenly put into a ceramic crucible; high-temperature sintering was performed in a well-type muffle furnace whose device model was VBF-1200X, where a heating curve of sintering was 5 °C/min; when a temperature of 1030°C was reached, constant-temperature sintering was performed for 10 hours; then, the mixture was naturally cooled to a normal temperature; and finally, a sample was taken out to obtain a sintered cobalt and lithium-containing compound Li_{1.0027}Co_{0.966}Al_{0.03}Mg_{0.002}La_{0.002}O₂.
(3) The sintered lithium cobalt oxide was pulverized and ground; the powder and titanium dioxide were weighed in a molar ratio Co:Ti = 96.6:0.2, and put into a high-speed mixing device; a mixing program was set; mixing was performed at 300 rpm for 3 minutes, at 500 rpm for 5 minutes, and at 1000 rpm for 10 minutes sequentially; then, the mixture powder was taken out and put into the muffle furnace; sintering was performed for 8 hours at 950°C; and finally, the sintered product was pulverized to obtain a doped and coated high-voltage lithium cobalt oxide material whose Dv50 was 14.8 µm and whose chemical formula was Li_{1.0027}Co_{0.966}Al_{0.03}Mg_{0.002}La_{0.002}Ti_{0.002}O₂, namely, a sample 17# of the positive electrode material.

### Comparative Example 3

A preparation method of a sample 18# of the positive electrode material is the same as that in Example 1. Details are not described herein again. A difference lies only in step 1:
(1) 36.56 g of sodium carbonate powder and 291.05 g of cobaltous nitrate hexahydrate powder were weighed and put into a high-speed mixing device, where no additives were added; a mixing program was set; mixing was performed at 300 rpm for 3 minutes, at 500 rpm for 5 minutes, and at 1000 rpm for 10 minutes sequentially; and finally, the mixture was taken out, where it was considered that the materials were evenly mixed after it was determined that there were no small white sodium carbonate spots in the mixture. The other steps were repeated to synthesize a material Li_{0.97}Na_{0.025}CoO₂ of Comparative Example 3, which had an O2 structure without any dopants.

### Comparative Example 4

A preparation method of a sample 19# of the positive electrode material is the same as that in Example 1. Details are not described herein again. A difference lies only in step 1:
(1) 36.56 g of sodium carbonate powder, 282.32 g of cobaltous nitrate hexahydrate powder, and 1.53 g of nano-alumina powder were weighed and put into a high-speed mixing device; a mixing program was set; mixing was performed at 300 rpm for 3 minutes, at 500 rpm for 5 minutes, and at 1000 rpm for 10 minutes sequentially; and finally, the mixture was taken out, where it was considered that the materials were evenly mixed after it was determined that there were no small white sodium carbonate spots in the mixture. The other steps were repeated to synthesize a material Li_{0.97}Na_{0.025}Co_{0.97}Al_{0.03}O₂ of Comparative Example 3, which had an O2 structure.

**Table 1: Proportions of chemical components of the positive electrode materials in Examples 1 to 11 and Comparative Examples 3 to 4 and addition amounts of used raw materials**

| Sample | Chemical formulas of cobalt and sodium-containing compounds obtained after sintering in step (2) | Addition amounts of com ponents (g) | | | | | | | | |
|---|---|---|---|---|---|---|---|---|---|---|
| | | Na₂CO₃ | K₂CO₃ | Co(NO₃)₂*6 H₂O | Al₂O₃ | MgO | H₃BO₃ | H₃PO₄ | La₂O₃ | Y₂O₃ |
| 1 | Na_{0.69}K_{0.003}Co_{0.97}Al_{0.03}O₂ | 36.56 | 0.21 | 282.32 | 1.53 | / | / | / | / | / |
| 2 | Na_{0.60}K_{0.0015}Co_{0.97}Al_{0.03}O₂ | 36.56 | 0.10 | 282.32 | 1.53 | / | / | / | / | / |
| 3 | Na_{0.69}K_{0.003}Co_{0.96}Al_{0.03}B_{0.01}O₂ | 36.56 | 0.21 | 279.41 | 1.53 | / | 0.62 | / | / | / |
| 4 | Na_{0.69}K_{0.003}Co_{0.96}Al_{0.03}P_{0.01}O₂ | 36.56 | 0.21 | 279.41 | 1.53 | / | / | 0.98 | / | / |
| 5 | Na_{0.69}K_{0.003}Co_{0.96}Al_{0.03}Mg_{0.01}O₂ | 36.56 | 0.21 | 279.41 | 1.53 | 0.40 | / | / | / | / |
| 6 | Na_{0.60}K_{0.003}Co_{0.96}Al_{0.03}B_{0.005}P_{0.005}O₂ | 36.56 | 0.21 | 279.41 | 1.53 | / | 0.31 | 0.49 | / | / |
| 7 | Na_{0.69}K_{0.003}Co_{0.95}Al_{0.04}B_{0.005}P_{0.005}O₂ | 36.56 | 0.21 | 276.50 | 2.04 | / | 0.31 | 0.49 | / | / |
| 8 | Na_{0.69}K_{0.003}Co_{0.965}Al_{0.03}Y_{0.005}O₂ | 36.56 | 0.21 | 280.86 | 1.53 | / | / | / | / | 0.56 |
| 9 | Na_{0.69}K_{0.003}Co_{0.965}Al_{0.03}La_{0.005}O₂ | 36.56 | 0.21 | 280.86 | 1.53 | / | / | / | 0.81 | / |
| 10 | Na_{0.6}9K_{0.003}CoO₂ | 36.56 | 0.21 | 291.05 | / | / | / | / | / | / |
| 11 | Na_{0.69}K_{0.0015}CoO₂ | 36.56 | 0.10 | 291.05 | / | / | / | / | / | / |
| 18 | Na_{0.69}CoO₂ | 36.56 | / | 291.05 | / | / | / | / | / | / |
| 19 | Na_{0.69}Co_{0.97}Al_{0.03}O₂ | 36.56 | / | 282.32 | 1.53 | / | / | / | / | / |

Each positive electrode material prepared in the foregoing Examples and Comparative Examples was assembled into a lithium-ion battery, where the lithium-ion battery included a positive electrode plate, a negative electrode plate, a separator disposed between the positive electrode plate and the negative electrode plate at intervals, and an electrolyte solution; and a charge cut-off voltage of the battery disclosed in the present invention was 4.5 V.

A preparation process of the lithium-ion battery was as follows:
Artificial graphite, styrene butadiene rubber (SBR), sodium carboxymethyl cellulose, and conductive carbon black were mixed in a weight ratio of 94%:3%:2%: 1%; the mixture was dispersed in water; and mixing was performed by using a double-planet mixer to obtain a negative electrode slurry. The slurry was applied on a copper current collector, followed by roll-pressing and drying, to obtain a negative electrode plate.

The positive electrode material was mixed with conductive carbon black and PVDF in a weight ratio of 96%:2%:2%; and the mixture was dispersed to obtain a positive electrode slurry. The slurry was applied on an aluminum foil current collector, followed by roll-pressing, to prepare a positive electrode plate.

The positive electrode plate, the negative electrode plate, and the separator were assembled into a lithium-ion battery; and an electrolyte solution (obtained by mixing ethylene carbonate (EC for short), diethyl carbonate (DEC for short), and propylene carbonate (PC for short) in a mass ratio of 2:5:3, and adding fluoroethylene carbonate (FEC for short) that accounted for 5% of a total mass of the electrolyte solution, lithium hexafluorophosphate (LiPF₆ for short) that accounted for 13% of the total mass of the electrolyte solution, and 2,4-butane sultone that accounted for 2% of the total mass of the electrolyte solution) was poured into the lithium-ion battery.

A cycling performance test was carried out for the prepared lithium-ion battery. A process of the cycling performance test was as follows:

At 25°C, the lithium-ion battery was charged to 4.50 V at a charging rate of 1C in a constant-current charging manner, then charged to 4.50 V at a charging rate of 0.05C in a constant-voltage charging manner, and discharged to 3.0 V at a discharging rate of 1C. The charge-discharge cycle was performed for 500 times repeatedly, where a discharge capacity at the first cycle and a discharge capacity at the 500^{th} cycle were tested; and a capacity retention rate after these cycles was calculated based on the discharge capacities according to the following calculation formula: Capacity retention rate after these cycles = (Discharge capacity at the 500th cycle)/(Discharge capacity at the first cycle) × 100%.

After the XRD test, the positive electrode material prepared in the Examples and Comparative Examples was assembled into a button battery; and a capacity test was carried out. A preparation method of the button battery was as follows:

The positive electrode material was mixed with conductive carbon black (SP) and PVDF in a weight ratio of 80%:10%:10%; and the mixture was dispersed to obtain a positive electrode slurry. The slurry was applied on an aluminum foil current collector, followed by roll-pressing, to prepare a positive electrode plate; then the positive electrode plate was punched with a mold into a small wafer whose diameter was 12 mm; and after baking and weighting, in a glove box under an Ar protection atmosphere, a button battery was assembled by using a 2025 button battery case, using a Li metal wafer as a negative electrode, and using an electrolyte solution (obtained by mixing ethylene carbonate (EC for short), diethyl carbonate (DEC for short), and propylene carbonate (PC for short) in a mass ratio of 2:5:3, and adding fluoroethylene carbonate (FEC for short) that accounted for 5% of a total mass of the electrolyte solution, lithium hexafluorophosphate (LiPF₆ for short) that accounted for 13% of the total mass of the electrolyte solution, and 2,4-butane sultone that accounted for 2% of the total mass of the electrolyte solution).

### Group of Examples 16

The group of Examples 16 were performed with reference to Example 1, and differed from Example 1 in that different amounts of 2,4-butane sultone were added into the electrolyte solution.

Example 16a: 2,4-butane sultone accounted for 0.1 wt% of the total mass of the electrolyte solution.

Example 16b: 2,4-butane sultone accounted for 10 wt% of the total mass of the electrolyte solution.

Example 16c: no 2,4-butane sultone was added.

Example 16d: 2,4-butane sultone accounted for 15 wt% of the total mass of the electrolyte solution.

After being made, the button battery was left standing for 4 hours in a normal environment; and a test for an initial charge capacity and an initial discharge capacity was carried out, where test conditions were as follows: charging to 4.5 V was performed at 0.1C; constant-voltage charging was performed at 0.025C and stopped; after 3 minutes' standing, discharging to 3.0 V was performed at 0.1C; and the initial discharge capacity, the initial charge capacity, and an initial efficiency were recorded. Specifically, a discharge capacity obtained when 0.1C charging and discharging was performed on the battery for the first time at a voltage of 3.0 V to 4.5 V was defined as C₀ mAh/g; a discharge capacity obtained in a voltage range from a voltage before first discharging to 4.4 V was defined as C₁ mAh/g; a discharge capacity obtained in a voltage range from 3.8 V to 3.7 V was defined as C₂; and C₁/C₀ and C₂/C₀ were calculated.

**Table 2: Performance test results of the positive electrode materials and batteries in the Examples and Comparative Examples**

| Group | Chemical formula | 2θ value (°) of a 002 crystal face | Ratio m of a peak intensity of a 101 crystal face to a peak intensity of a 004 crystal face | Initial charge capacity of the button battery (mAh/g) | Initial discharge capacity of the button battery (mAh/g) | Initial efficiency of the button battery (%) | C₁/C₀ (%) | C₂/C₀ (%) | Capacity retention rate of the full battery after 500 cycles (%) |
|---|---|---|---|---|---|---|---|---|---|
| Example 1 | Li_{0.97}Na_{0.025}K_{0.003}Co_{0.97}Al_{0.03}O₂ | 18.5675 | 3.890 | 214.7 | 204.9 | 95.4 | 13.35 | 31.16 | 86.7 |
| Example 2 | Li_{0.97}Na_{0.025}K_{0.0015}Co_{0.97}Al_{0.03}O₂ | 18.5675 | 3.057 | 211.8 | 202.6 | 95.7 | 12.79 | 30.98 | 86.0 |
| Example 3 | Li_{0.97}Na_{0.025}K_{0.003}Co_{0.96}Al_{0.03}B_{0.01}O₂ | 18.5675 | 3.948 | 210.5 | 203.1 | 96.5 | 13.13 | 31.57 | 87.2 |
| Example 4 | Li_{0.97}Na_{0.025}K_{0.003}Co_{0.96}Al_{0.03}P_{0.01}O₂ | 18.5806 | 3.995 | 212.7 | 204.1 | 96.0 | 13.41 | 31.62 | 88.1 |
| Example 5 | Li_{0.97}Na_{0.025}K_{0.003}Co_{0.96}Al_{0.03}Mg_{0.01}O₂ | 18.5543 | 4.015 | 212.3 | 203.5 | 95.9 | 13.32 | 31.54 | 89.0 |
| Example 6 | Li_{0.97}Na_{0.025}K_{0.003}Co_{0.96}Al_{0.03}B_{0.005}P_{0.005}O₂ | 18.5675 | 3.850 | 213.7 | 205 | 95.9 | 13.65 | 31.84 | 87.9 |
| Example 7 | Li_{0.97}Na_{0.025}K_{0.003}Co_{0.95}Al_{0.04}B_{0.005}P_{0.005}O₂ | 18.5806 | 3.809 | 213.2 | 203.8 | 95.6 | 13.27 | 32.02 | 88.5 |
| Example 8 | Li_{0.97}Na_{0.025}K_{0.003}Co_{0.965}Al_{0.03}Y_{0.005}O₂ | 18.5543 | 3.847 | 214.2 | 203.5 | 95.0 | 13.33 | 31.97 | 86.8 |
| Example 9 | Li_{0.97}Na_{0.025}K_{0.003}Co_{0.965}Al_{0.03}Y_{0.005}O₂ | 18.5675 | 3.657 | 212.9 | 203.9 | 95.8 | 13.07 | 31.83 | 87.2 |
| Example 10 | Li_{0.97}Na_{0.025}K_{0.003}CoO₂ | 18.5806 | 2.893 | 213.6 | 204.7 | 95.8 | 12.98 | 31.17 | 86.3 |
| Example 11 | Li_{0.97}Na_{0.025}K_{0.0015}CoO₂ | 18.5806 | 2.776 | 211.7 | 202.9 | 95.8 | 12.65 | 30.87 | 85.6 |
| Example 12 | Li_{0.97}Na_{0.025}K_{0.003}Co_{0.97}Al_{0.03}O₂ | 18.5806 | 3.998 | 211.8 | 202.8 | 95.8 | 13.38 | 31.22 | 86.9 |
| Example 13 | Li_{0.97}Na_{0.025}K_{0.003}Co_{0.97}Al_{0.03}O₂ | 18.5937 | 4.023 | 212.4 | 203.3 | 95.7 | 13.55 | 32.10 | 86.3 |
| Example 14 | Li_{0.97}Na_{0.025}K_{0.003}Co_{0.97}Al_{0.03}O₂ | 18.6069 | 3.895 | 213.5 | 203.7 | 95.4 | 13.67 | 31.99 | 86.6 |
| Example 15 | Li_{0.97}Na_{0.025}K_{0.003}Co_{0.97}Al_{0.03}O₂ | 18.6069 | 4.025 | 212.8 | 204.2 | 96.0 | 13.32 | 31.66 | 87.8 |
| Example 16a | Same as that in Example 1 | - | - | 214.9 | 205.2 | 95.4 | 13.78 | 31.75 | 87.8 |
| Example 16b | Same as that in Example 1 | - | - | 215 | 204.8 | 95.2 | 13.68 | 31.91 | 88.1 |
| Example 16c | Same as that in Example 1 | - | - | 215.6 | 205.4 | 95.3 | 13.24 | 31.07 | 85.3 |
| Example 16d | Same as that in Example 1 | - | - | 214.3 | 204.1 | 95.2 | 13.18 | 31.41 | 85.8 |
| Comparative Example 1 | Li_{1.0025}CoO₂ | No characteristic peak | / | 204.4 | 194.6 | 95.2 | 5.47 | 0.42 | 53.8 |
| Comparative Example 2 | Li_{1.0027}Co_{0.966}Al_{0.03}Mg_{0.002}La_{0.002}Ti_{0.002}O₂ | No characteristic peak | / | 199.3 | 186.9 | 93.8 | 5.84 | 0.49 | 76.4 |
| Comparative Example 3 | Li_{0.97}Na_{0.025}CoO₂ | 18.5937 | 1.799 | 210.5 | 201.2 | 95.6 | 11.29 | 29.66 | 85.3 |
| Comparative Example 4 | Li_{0.97}Na_{0.025}Co_{0.97}Al_{0.03}O₂ | 18.5675 | 1.995 | 209.8 | 200.5 | 95.6 | 11.45 | 29.72 | 85.1 |

| | | | | | | | | | |
|---|---|---|---|---|---|---|---|---|---|
| Note: "-" and/or "/" in Table 2 indicates that the corresponding parameter was not tested. | | | | | | | | | |

Data of Examples 1 to 11 shows that during sintering synthesis of the step (2), compositions and contents of raw materials for preparation all have a specific effect on a phase peak position and a peak intensity of a synthesized compound that contains sodium, potassium, and cobalt and has a new structure. Compared with Comparative Examples 3 and 4, Examples 1 to 11 have higher initial discharge capacities and cycling performance.

Data of Examples 1 and Examples 12 to 15 shows that different reaction parameters such as a stirring speed and a water content have specific effects on electrochemical performance of a new material. For example, when the stirring speed and the water content increase, gram capacity performance has a specific increasing trend.

It may be learned from the test results of Examples 1 to 15 and Comparative Examples 1 to 4 that when the positive electrode material of the present invention is used as a positive electrode active material of a lithium-ion battery, in the Examples of the present invention, there are relatively high initial discharge capacities in voltage systems of 4.5 V and a higher voltage, and compared with a lithium cobalt oxide material of a conventional structure, the discharge capacities are obviously improved, and all of the capacity retention rates after 500 cycles are at least above 85%. In addition, doping element K can obviously improve a capacity and cycling performance of a button battery including the positive electrode material. With the increase of a doping amount of K, the cycling performance and the gram capacity are improved gradually. Based on analysis, it is considered that a radius of K atoms is greater than those of Li atoms and Na atoms, and a position occupied by a K atom in a new structure plays a supporting role, which facilitates intercalation and deintercalation of a Li ion, thereby being beneficial to improve the cycling performance and the initial discharge capacity.

It may be learned from the test results of the group of Examples 16 that when the content of 2,4-butane sultone is within the scope defined in the solution of the present invention, the additive is beneficial to form a film, which improves the cycling performance of the battery to some extent.

In summary, when a lithium-ion battery assembled from the positive electrode material prepared according to the present invention is at a high voltage, the lithium-ion battery may have not only a relatively high discharge gram capacity but also excellent cycling performance, so that people's thinning requirements on lithium-ion batteries can be satisfied.

The implementations of the present invention are described above. However, the present invention is not limited to the foregoing implementations. Any modifications, equivalent replacements, improvements, or the like made without departing from the principle of the present invention shall fall within the protection scope of the present invention.

## Claims

1. A positive electrode material, **characterized in that** the positive electrode material is a lithium-containing transition metal oxide that comprises element Li, element Na, element K, and element Co, and optionally comprises element A and/or element M; element A is selected from at least one of B or P; and element M is selected from at least one of Al, Mg, Ti, Mn, Te, Ni, W, Nb, Zr, La, or Y

2. The positive electrode material according to claim 1, **characterized in that** a molar mass of element K in each mole of the positive electrode material is z; a molar mass of element Co in each mole of the positive electrode material is 1-a-b; a molar mass of element A in each mole of the positive electrode material is a; a molar mass of element M in each mole of the positive electrode material is b; and a ratio of z to 1-a satisfies 0 < z/1-a < 0.05.

3. The positive electrode material according to claim 1 or 2, **characterized in that** the molar mass z of element K in each mole of the positive electrode material satisfies 0 < z < 0.05; and/or
a molar mass y of element Na in each mole of the positive electrode material satisfies 0 < y < 0.03.

4. The positive electrode material according to any one of claims 1 to 3, **characterized in that** the molar mass a of element A in each mole of the positive electrode material satisfies 0 ≤ a < 0.05; and/or
the molar mass b of element M in each mole of the positive electrode material satisfies 0 ≤ b < 0.1.

5. The positive electrode material according to any one of claims 1 to 4, **characterized in that** a chemical formula of the positive electrode material is: Li_{n-y-z}Na_{y}K_{z}Co_{1-a-b}AₐM_{b}O₂, wherein 0.95 ≤ n ≤ 1.02, 0 < y < 0.03, 0 < z < 0.05, 0 ≤ a < 0.05, 0 ≤ b < 0.1, and 0 < z/1-a < 0.05.

6. The positive electrode material according to any one of claims 1 to 5, **characterized in that** the positive electrode material has an O2 phase packed structure and belongs to a P63mc space group.

7. The positive electrode material according to any one of claims 1 to 6, **characterized in that** the positive electrode material has a polycrystalline morphology or a single crystal morphology.

8. The positive electrode material according to any one of claims 1 to 6, **characterized in that** X-ray diffraction tests show that the positive electrode material comprises at least a 002 crystal face (2θ = 18.6° ± 0.5°) characteristic peak, a 102 crystal face (2θ = 41.7° ± 0.5°) characteristic peak, and a 103 crystal face (2θ = 47.1° ± 0.5°) characteristic peak.

9. The positive electrode material according to any one of claims 1 to 6, **characterized in that** X-ray diffraction tests show that a peak intensity ratio m of a 101 crystal face (2θ = 38.2° ± 0.2°) characteristic peak of the positive electrode material to a 004 crystal face (2θ = 37.6° ± 0.2°) characteristic peak thereof is greater than or equal to 2.

10. The positive electrode material according to any one of claims 1 to 9, **characterized in that** Dv50 of the positive electrode material ranges from 12 µm to 20 µm.

11. The positive electrode material according to any one of claims 1 to 10, **characterized in that** a gram capacity of the positive electrode material is greater than or equal to 210 mAh/g.

12. A positive electrode plate, **characterized in that** the positive electrode plate comprises the positive electrode material according to any one of claims 1 to 11.

13. A battery, **characterized by** comprising the positive electrode material according to any one of claims 1 to 11, or the battery comprises the positive electrode plate according to claim 12.

14. The battery according to claim 13, **characterized in that** a discharge capacity obtained when 0.1C charging and discharging is performed on the battery for the first time at a voltage of 3.0 V to 4.5 V is defined as C₀ mAh/g, a discharge capacity obtained in a voltage range from a voltage before first discharging to 4.4 V is defined as C₁ mAh/g, a discharge capacity obtained in a voltage range from 3.8 V to 3.7 V is defined as C₂ mAh/g, and the discharge capacities of the positive electrode material at 0.1 C satisfy C₁/C₀ ≥ 9% and C₂/C₀ ≥ 25%.

15. The battery according to claim 13 or 14, **characterized in that** the battery further comprises an electrolyte solution, the electrolyte solution further comprises an additive, and the additive comprises 2,4-butane sultone, and
preferably, a content of 2,4-butane sultone accounts for 0.1 wt% to 10 wt% of a total mass of the electrolyte solution.
